# EUROPÄISCHE PATENTANMELDUNG

(11) **EP 4 803 893 A1**
(43) Veröffentlichungstag der Anmeldung: **09.09.2026**
(21) Anmeldenummer: 26155984.3
(22) Anmeldetag: 03.02.2026
(51) Int. Cl.: G01N 27/22

(54) **FEUCHTEMESSVORRICHTUNG UND VERFAHREN ZUM BETRIEB EINER FEUCHTEMESSVORRICHTUNG**

(30) Priorität: 04.03.2025 DE 102025000778
(71) Anmelder: E+E ELEKTRONIK GES.M.B.H., 4209 Engerwitzdorf (AT)
(72) Erfinder: HAIDER, Albin, 4211 Alberndorf (AT); GRATZL, Joachim, 3060 Leonding (AT)
(74) Vertreter: Hofmann, Ernst

(57) **Zusammenfassung**

Die vorliegende Erfindung betrifft eine Feuchtemessvorrichtung sowie ein Verfahren zum Betrieb einer Feuchtemessvorrichtung. Die Feuchtemessvorrichtung umfasst einen kapazitiven Feuchtesensor zur Bestimmung des Feuchtegehalts in einem umgebenden Medium, wobei eine Schutzschicht den Feuchtesensor umgibt und durchlässig für Wassermoleküle ist. Es ist vorgesehen, die die Feuchtemessvorrichtung auf eine Aufheiztemperatur aufzuheizen und nach einer bestimmten Zeitdauer die Feuchtemessvorrichtung auf eine Abkühltemperatur abzukühlen. Nach dem Abkühlvorgang resultiert während einer Totzeit, in der keine Wassermoleküle durch die Schutzschicht zum Feuchtesensor gelangen, keine Signaländerung des Feuchtesensors. Über einen Temperatursensor werden laufend Temperatur-Messwerte und über den Feuchtesensor laufend Feuchte-Messwerte bestimmt, bis nach dem Abkühlen und dem Verstreichen der Totzeit nach einer bestimmten Zeitdauer bei der Abkühltemperatur ein gleichbleibender Feuchte-Messwert erreicht ist. Dadurch ist es möglich, die Feuchte-Messwerte in Bezug auf Einflüsse zu korrigieren, die nicht auf die Änderung des Feuchtegehalts im umgebenden Medium zurückgehen (Fig. 9).

## Beschreibung

### GEBIET DER TECHNIK

Die vorliegende Erfindung betrifft eine Feuchtemessvorrichtung sowie ein Verfahren zum Betrieb einer Feuchtemessvorrichtung, die eine hochgenaue Feuchtemessung auch über längere Betriebsdauern sowie die exakte Bestimmung und Ausgabe der Taupunkttemperatur eines umgebenden Mediums auch bei niedrigen Taupunkttemperaturen ermöglicht.

### STAND DER TECHNIK

Die Messung des Taupunkts von Gasen stellt eine wichtige prozesstechnische und meteorologische Messaufgabe dar. Der Taupunkt bzw. die Taupunkttemperatur gibt an, ab welcher Gastemperatur das in dem Gas enthaltene Wasser kondensiert bzw. bezeichnet diejenige Gastemperatur, bei der ein Gas über einer Wasserfläche vollständig mit Wasserdampf gesättigt ist. In manchen Fällen wird eine Taupunkttemperatur unter 0°C auch als Frostpunkttemperatur bezeichnet; die Frostpunkttemperatur gibt dabei diejenige Temperatur an, bei der ein Gas über einer Eisfläche vollständig mit Wasserdampf gesättigt ist. Der Taupunkt hingegen bezeichnet die Temperatur, bei der das Gas über einer Wasseroberfläche vollständig gesättigt ist. Im Folgenden sei nur von der Taupunkttemperatur die Rede, auch bei Taupunkttemperaturen unter 0°C.

Erfolgt eine Kondensation zum Beispiel in Druckluftanlagen, sind Schäden an der Anlage und Qualitätseinbußen am Endprodukt die Folge. In der Gebäudetechnik werden beispielsweise Messvorrichtungen zur Bestimmung der Taupunkttemperatur (Taupunktmessgeräte, Taupunktwächter) eingesetzt, um die Gefahr einer Kondensationsbildung, zum Beispiel bei Klimadecken, in Rohrleitungen oder Schaltschränken, rechtzeitig zu erkennen, noch bevor es zu Schäden kommt. Auch bei Trocknungsprozessen oder in der Halbleiterindustrie ist die Überwachung der Taupunkttemperatur notwendig. Eine Messung der Taupunkttemperatur erfolgt dabei üblicherweise nicht direkt, sondern über die Messung von Temperatur und relativer Luftfeuchtigkeit (nachfolgend auch nur als Feuchte bezeichnet) und der geeigneten Verrechnung dieser Größen z.B. über die sogenannten Sonntag-Formeln.

Im Fall von niedrigen Taupunkttemperaturen müssen nur sehr kleine Messwerte bezüglich der relativen Luftfeuchtigkeit erfasst werden. Es resultieren hierbei hohe Anforderungen an die Genauigkeit der Luftfeuchte-Messung. Beim Einsatz kapazitiver Feuchtesensoren wird üblicherweise die Kapazitätsänderung eines geeigneten Polymers als Messgröße für die relative Feuchtigkeit genutzt. Ein maßgeblich begrenzender Faktor für die Genauigkeit der Feuchtemessung ist dabei die Kenntnis der sogenannten Temperaturquerempfindlichkeit bzw. des Temperaturkoeffizienten des kapazitiven Feuchtesensors über den zu messenden Temperaturbereich, der sich im Verlauf der Zeit verändern kann. Neben dem Einfluss der Temperatur auf die Genauigkeit der Feuchtemessung können auch die Alterung des Polymers, chemische Einflüsse oder aber Änderungen an der verwendeten Auswerteelektronik die Feuchtemessung beeinflussen. Für eine gleichbleibend hochgenaue Feuchtemessung mittels kapazitiver Feuchtesensoren ist es daher wichtig, den Einfluss dieser Effekte möglichst genau zu kennen, um diese von der tatsächlich feuchteabhängigen Kapazitätsänderung trennen zu können.

Aus der EP 4012393 A1 ist ein Vorgehen bekannt, die Temperaturquerempfindlichkeit des verwendeten Feuchtesensor-Polymers von einem tatsächlichen Feuchtesprung zu trennen, der durch die real vorliegende Luftfeuchtigkeit bewirkt wird. Hierzu wird vorgeschlagen, die Ansprechzeit der Temperaturmessung deutlich schneller zu machen als die Ansprechzeit der Feuchtemessung. Dies soll über einen Membranaufbau des Feuchtesensors erreicht werden, der die thermische Masse des Feuchtesensors deutlich reduziert. Die in dieser Druckschrift vorgeschlagene Lösung erlaubt jedoch keine zuverlässige Trennung des Einflusses der Temperaturquerempfindlichkeit von der tatsächlichen Feuchtemessung. Dies ist auch darauf zurückzuführen, dass die Ansprechzeit der Temperaturmessung bei variierender Mediumtemperatur nahezu gleichbleibt, während die Ansprechzeit der Feuchtemessung bei hohen Temperaturen auch sehr viel schneller wird. Als Konsequenz hieraus variiert die Differenz zwischen den verschiedenen Ansprechzeiten temperaturabhängig und erschwert dadurch die sichere Identifikation der Temperaturquerempfindlichkeit.

### ZUSAMMENFASSUNG DER ERFINDUNG

Der vorliegenden Erfindung liegt die Aufgabe zugrunde, eine Feuchtemessvorrichtung und ein Verfahren zum Betrieb einer Feuchtemessvorrichtung anzugeben, um über einen längeren Zeitraum eine hochgenaue Messung auch von sehr kleinen Feuchtemesswerten zu ermöglichen. Insbesondere soll dabei die möglichst zuverlässige Trennung der Messwertänderung durch die Feuchteänderung und sonstiger Einflüsse wie z.B. die Temperaturquerempfindlichkeit des Polymers, die Alterung des Polymers, die Temperaturquerempfindlichkeit der Auswerteelektronik usw. gewährleistet sein.

Diese Aufgabe wird erfindungsgemäß durch eine Feuchtemessvorrichtung mit den Merkmalen des Anspruchs 1 gelöst.

Vorteilhafte Ausführungen der erfindungsgemäßen Feuchtemessvorrichtung ergeben sich aus den Maßnahmen, die in den von Anspruch 1 abhängigen Ansprüchen aufgeführt sind.

Die erfindungsgemäße Feuchtemessvorrichtung umfasst
- einen kapazitiven Feuchtesensor zur Bestimmung des Feuchtegehalts in einem umgebenden Medium,
- eine Schutzschicht, die den Feuchtesensor umgibt und durchlässig für Wassermoleküle ist,
- einen Temperatursensor zur Bestimmung der Temperatur des Feuchtesensors und des umgebenden Mediums,
- eine Steuereinheit, der die Ausgangssignale des Feuchtesensors und des Temperatursensors zuführbar sind,
- ein Heizelement zum Aufheizen der Feuchtemessvorrichtung auf eine definierte Aufheiztemperatur, und
- ein Kühlelement zum Abkühlen der Feuchtemessvorrichtung auf eine definierte Abkühltemperatur.

Die Schutzschicht ist derart ausgebildet, dass deren Abkühl-Zeitdauer zwischen Aufheiztemperatur und Abkühltemperatur kürzer ist als eine Totzeit, während der nach dem Abkühlen keine Wassermoleküle durch die Schutzschicht zum Feuchtesensor gelangen und während der keine Signaländerung des Feuchtesensors resultiert.

Es ist möglich, dass die Schutzschicht als organische Schutzschicht ausgebildet ist und eine Dicke im Bereich 0,1µm - 100µm aufweist.

Alternativ hierzu kann auch vorgesehen sein, dass die Schutzschicht als anorganische Schutzschicht ausgebildet ist und eine Dicke im Bereich 0,02µm - 10µm aufweist.

Vorzugsweise sind mindestens die Steuereinheit, der Temperatursensor und das Heizelement gemeinsam in einem integrierten Baustein angeordnet.

Weiterhin kann vorgesehen sein, dass der Feuchtesensor als Plattenkondensator ausgebildet und ebenfalls im integrierten Baustein angeordnet ist und vom umgebenden Medium durch die über dem Plattenkondensator angeordnete Schutzschicht getrennt ist.

In einer möglichen Ausführungsform ist das Kühlelement als Peltierelement ausgebildet.

In diesem Fall ist es möglich, dass das Peltierelement auch als Heizelement fungiert und dessen jeweilige Funktionalität über die Steuereinheit einstellbar ist.

Des Weiteren kann auch vorgesehen sein, dass das Kühlelement als metallische Kühlfläche in einem Trägerelement ausgebildet ist, auf dem der integrierte Baustein angeordnet ist, und über die Kühlfläche eine Konvektionskühlung der Feuchtemessvorrichtung resultiert.

Vorzugsweise ist die Steuereinheit derart ausgebildet und eingerichtet ist, um
- die Feuchtemessvorrichtung auf die Aufheiztemperatur aufzuheizen, und
- nach einer bestimmten Zeitdauer auf der Aufheiztemperatur die Feuchtemessvorrichtung auf die Abkühltemperatur abzukühlen, und
- dabei laufend über den Temperatursensor Temperatur-Messwerte und über den Feuchtesensor Feuchte-Messwerte bestimmt werden, bis nach dem Abkühlen und dem Verstreichen der Totzeit nach einer bestimmten Zeitdauer bei der Abkühltemperatur ein gleichbleibender Feuchte-Messwert erreicht ist, wodurch die Feuchte-Messwerte in Bezug auf Einflüsse korrigierbar sind, die nicht auf die Änderung des Feuchtegehalts im umgebenden Medium zurückgehen.

Hierbei kann die Steuereinheit derart ausgebildet und eingerichtet sein, um das Aufheizen, das Abkühlen sowie die Korrektur der Feuchte-Messwerte zyklisch durchzuführen.

Weiterhin wird die oben genannte Aufgabe durch ein Verfahren mit den Merkmalen des Anspruch 11 gelöst.

Vorteilhafte Ausführungen des erfindungsgemäßen Verfahrens ergeben sich aus den Maßnahmen, die in den von Anspruch 11 abhängigen Ansprüchen aufgeführt sind.

Das erfindungsgemäße Verfahren zum Betrieb einer Feuchtemessvorrichtung, die einen kapazitiven Feuchtesensor zur Bestimmung des Feuchtegehalts in einem umgebenden Medium umfasst, der von einer für Wassermoleküle durchlässigen Schutzschicht umgeben ist, sieht vor, dass
- die Feuchtemessvorrichtung auf eine Aufheiztemperatur aufgeheizt wird, und
- nach einer bestimmten Zeitdauer auf der Aufheiztemperatur die Feuchtemessvorrichtung auf eine Abkühltemperatur abgekühlt wird, und
- nach dem Abkühlvorgang während einer Totzeit, in der keine Wassermoleküle durch die Schutzschicht zum Feuchtesensor gelangen, keine Signaländerung des Feuchtesensors resultiert, wobei
- laufend Temperatur-Messwerte und Feuchte-Messwerte bestimmt werden, bis nach dem Abkühlen und dem Verstreichen der Totzeit nach einer bestimmten Zeitdauer bei der Abkühltemperatur ein gleichbleibender Feuchte-Messwert erreicht ist, wodurch die Feuchte-Messwerte in Bezug auf Einflüsse korrigiert werden, die nicht auf die Änderung des Feuchtegehalts im umgebenden Medium zurückgehen.

Vorzugsweise wird dabei
- die Feuchtemessvorrichtung mindestens über eine Zeitdauer bei der Aufheiztemperatur betrieben, bis ein Feuchteausgleich zwischen dem umgebenden Medium und dem Feuchtesensor vorliegt, und/oder
- die Feuchtemessvorrichtung mindestens über eine Zeitdauer bei der Abkühltemperatur betrieben, bis ein Feuchteausgleich zwischen dem umgebenden Medium und dem Feuchtesensor vorliegt.

Mit Vorteil ist hierbei die Abkühl-Zeitdauer der Schutzschicht zwischen Aufheiztemperatur und Abkühltemperatur kürzer als die Totzeit gewählt.

Es ist grundsätzlich möglich, dass das Abkühlen aktiv oder durch Konvektionskühlung erfolgt.

Vorzugsweise wird das Aufheizen, das Abkühlen sowie die Korrektur der Feuchte-Messwerte zyklisch durchgeführt.

Über die erfindungsgemäßen Maßnahmen kann nunmehr unter realen Messbedingungen bei gleichbleibender Temperatur eine definierte Feuchteänderung erzeugt werden, die von anderen Effekten bei der Erzeugung der Feuchte-Messwerte über einen kapazitiven Feuchtesensor klar unterscheidbar ist. Auf diese Art und Weise ist eine zuverlässige Korrektur der Feuchtemesswerte in Bezug auf Einflüsse möglich, die nicht auf die Änderung der relativen Feuchte zurückgehen, also z.B. die oben genannte Temperaturquerempfindlichkeit des im Feuchtesensor genutzten Polymers.

Im Fall der Verwendung eines aktiven Kühlelements, z.B. in Form eines Peltier-Elements, ist die definierte und rasche Einstellung einer Abkühltemperatur für die Feuchtemessvorrichtung möglich. Wegen der dabei stattfindenden Feuchtetransformation ist über die Kühlung eine hohe Auflösung bei der Feuchtemessung gewährleistet; dadurch ist auch die Bestimmung sehr niedriger Taupunkttemperaturen weit unterhalb von -80°C möglich, ohne dass hierzu aufwändige Systeme erforderlich sind, wie z.B. sogenannte Taupunktspiegel.

Weitere Einzelheiten und Vorteile der vorliegenden Erfindung seien anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: eine Darstellung zur detaillierteren Erläuterung des bekannten Vorgehens zur Messung von Feuchtewerten für die Bestimmung der Taupunkttemperatur;
- Figur 2a: eine Darstellung der Abhängigkeit verschiedener Größen von der Aufheiztemperatur beim Vorgehen gemäß Figur 1 und einem Taupunkt von -40°C;
- Figur 2b: eine Darstellung der Abhängigkeit verschiedener Größen von der Aufheiztemperatur beim Vorgehen gemäß Figur 1 und einem Taupunkt von -80°C;
- Figur 3: eine stark schematisierte Darstellung eines ersten Ausführungsbeispiels der erfindungsgemäßen Feuchtemessvorrichtung;
- Figur 4: eine Darstellung zur Veranschaulichung der Temperaturabhängigkeiten der Totzeit der Feuchtemessvorrichtung gemäß Figur 3 mit und ohne Schutzschicht;
- Figur 5: eine Darstellung zur detaillierteren Erläuterung des erfindungsgemäßen Vorgehens zur Bestimmung der Temperaturquerempfindlichkeit des kapazitiven Feuchtesensors aus der Vorrichtung gemäß Figur 3;
- Figur 6a - 6c: jeweils eine Darstellung zur Veranschaulichung des zeitlichen Verlaufs von Temperatur- und Feuchtemesswerten in der Vorrichtung aus Figur 3 während des erfindungsgemäßen Vorgehens;
- Figur 7: eine stark schematisierte Darstellung eines zweiten Ausführungsbeispiels der erfindungsgemäßen Feuchtemessvorrichtung;
- Figur 8: eine Darstellung zur Veranschaulichung der Temperaturabhängigkeiten der Totzeit einer kapazitiven Feuchtemessvorrichtung gemäß Figur 7 mit und ohne Schutzschicht;
- Figur 9: eine Darstellung des zeitlichen Verlaufs von Temperatur- und Feuchtemesswerten während des erfindungsgemäßen Vorgehens;
- Figur 10a - 10c: jeweils eine Darstellung zur Veranschaulichung des zeitlichen Verlaufs von Temperatur- und Feuchtemesswerten in der Vorrichtung aus Figur 7 während des erfindungsgemäßen Vorgehens.

### BESCHREIBUNG DER AUSFÜHRUNGSFORMEN

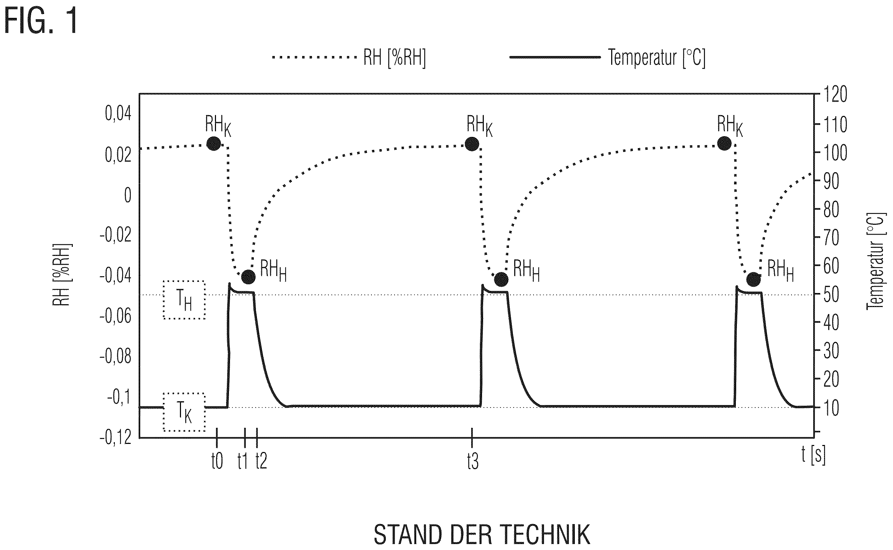

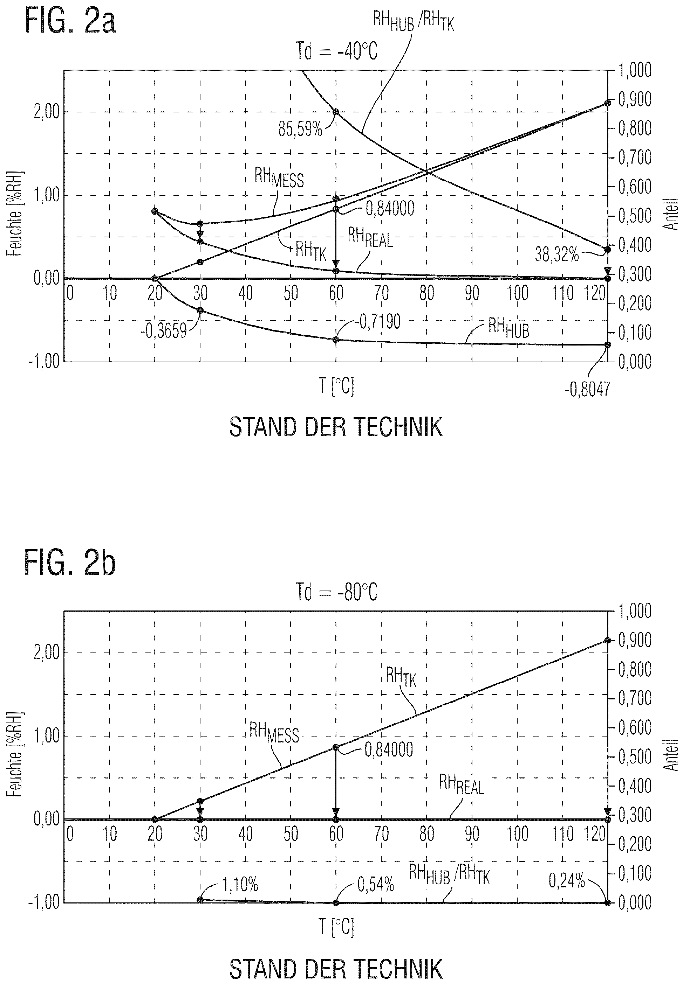

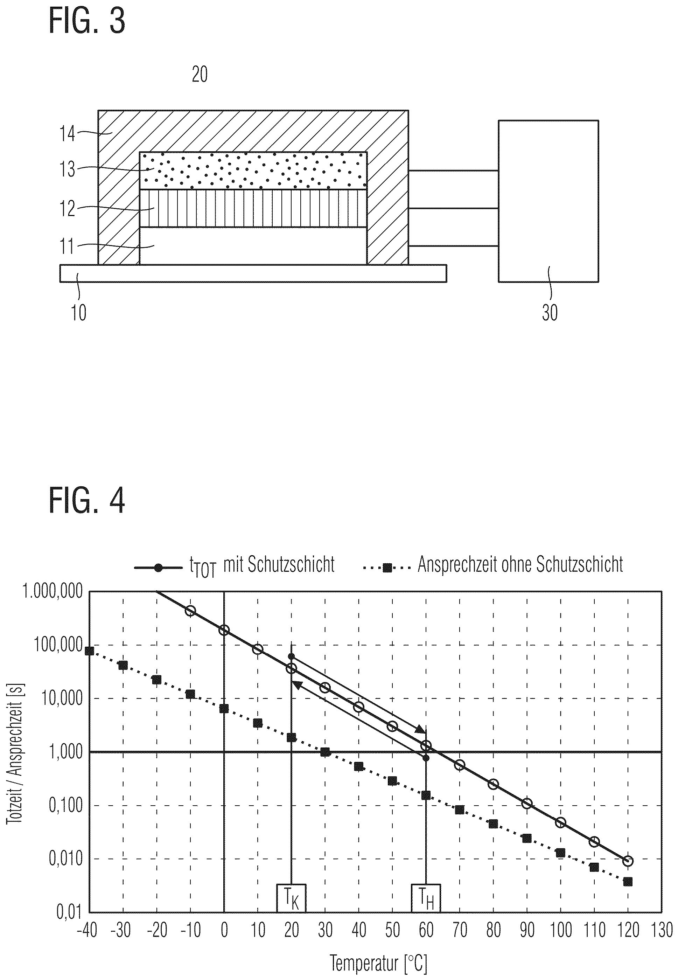

Bevor anhand der Figuren 3 - 10c Ausführungsbeispiele der erfindungsgemäßen Vorrichtung bzw. des erfindungsgemäßen Verfahrens im Detail beschrieben werden, sei zunächst mit Hilfe der Figuren 1, 2a, 2b das bekannte Vorgehen zur Bestimmung der Temperaturquerempfindlichkeit eines kapazitiven Feuchtesensors in einer Feuchtemessvorrichtung erläutert.

Übliche kapazitive Feuchtesensoren sind z.B. als Plattenkondensator mit zwei gegenüberliegenden, flächigen Elektroden ausgebildet, zwischen denen ein Polymer angeordnet ist, dessen Kapazität sich feuchteabhängig ändert. Neben der Plattenkondensator-Bauweise sind weiterhin auch Interdigitalstruktur-Aufbauten bekannt, bei denen zwischen fingerartig, ineinander verschachtelt angeordneten Elektroden das Polymer mit feuchteabhängiger Kapazität angeordnet ist. Die Kapazitätsänderung im Polymer wird in beiden Aufbau-Varianten jeweils in ein elektrisches Signal umgewandelt, das von einer Folgeelektronik weiterverarbeitbar ist.

Im oberen Teil von Figur 1 ist der zeitliche Verlauf der Feuchte-Messwerte während des nachfolgend erläuterten Vorgehens gezeigt, die linke y-Achse gibt die entsprechenden Feuchte-Messwerte RH an. Im unteren Teil der Figur ist der zeitliche Temperatur-Verlauf veranschaulicht, die rechte y-Achse gibt die jeweiligen Temperatur-Messwerte T an.

Gemäß Figur 1 wird zum Zeitpunkt t0 mit Hilfe des kapazitiven Feuchtesensors ein Messwert für die Feuchte RH_{K} sowie über einen Temperatursensor ein Messwert für die Temperatur T_{K} des umgebenden Mediums bestimmt. Die Temperatur T_{K} sei nachfolgend auch als Abkühltemperatur bezeichnet; im vorliegenden Beispiel ist T_{K} = 10°C gewählt. Es sei darauf hingewiesen, dass wenn hier und im Gefolge von einer Feuchte RH gesprochen wird, jeweils die relative Feuchte gemeint ist, die über einen geeigneten kapazitiven Feuchtesensor gemessen wird.

Im Anschluss an den Zeitpunkt t0 wird die Feuchtemessvorrichtung, die u.a. den kapazitiven Feuchtesensor und den Temperatursensor umfasst, bis zum Zeitpunkt t1 auf eine Aufheiztemperatur T_{H} aufgeheizt und ein Messwert für die Feuchte RH_{H} und die Temperatur T_{H} erfasst; die Aufheiztemperatur T_{H} beträgt gemäß Figur 1 T_{H} = 50°C. Wie weiterhin aus Figur 1 ersichtlich, sinkt mit dem Aufheizen die Feuchte auf einen sehr geringen Wert RH_{H} ab. Nach dem Abschalten der Heizung sinkt die Temperatur wieder auf die Abkühltemperatur T_{K} und die Feuchte steigt wieder an, bis sie zum Zeitpunkt t3 einen annähernd gleichbleibenden Wert RH_{K} erreicht. Dieses Vorgehen wird zyklisch wiederholt.

Über die bekannten Formeln nach Sonntag (Sonntag, D.: Important new values of the physical constants of 1986, vapour pressure formulations based on the ITS-90, and psychrometer formulae; Z. Meteorol., 70 (5), 1990, pp. 340-344) lassen sich aus den gemessenen Wertepaaren für Feuchte und Temperatur nunmehr zwei Taupunkttemperaturen Td1, Td2 als Funktion der verschiedenen gewonnenen Messwerte bestimmen. Eine erste Taupunkttemperatur Td1 ergibt sich dabei aus dem Messwertpaar, das bei der Abkühltemperatur T_{K} zum Zeitpunkt t0 erfasst wird. Nachfolgend werden diesbezüglich nicht die Beziehungen gemäß den Sonntag-Formeln wiedergegeben, sondern lediglich die grundsätzlichen funktionalen Abhängigkeiten der verschiedenen Taupunkttemperaturen Td1, Td2 von den relevanten Größen angeführt: $Td 1 = f \left({RH}_{K}+{RH}_{OFFSET}, {T}_{K}\right)$ mit:
Td1 := erste Taupunkt-Temperatur zum Zeitpunkt t0
RH_{K} := gemessene Feuchte zum Zeitpunkt t0
T_{K} := gemessene Temperatur zum Zeitpunkt t0 (Abkühltemperatur)
RH_{OFFSET}:= Feuchte-Offset, um systematische Messfehler zu korrigieren, z.B. bedingt durch Polymeralterung etc.

Eine zweite Taupunkttemperatur Td2 ergibt sich aus dem Messwert für die Aufheiztemperatur T_{H} zum Zeitpunkt t1 und einer zu berechnenden Feuchte RH_{H}' bei der Abkühltemperatur T_{K}: $\begin{matrix}Td 2 : = f \left({RH}_{H}′+{RH}_{OFFSET}, {T}_{H}\right) = f \left({RH}_{H}-{RH}_{TK}+{RH}_{OFFSET}, {T}_{H}\right) = \\ f \left({RH}_{H}-\left(TK_Polymer\cdot \left({T}_{H}-{T}_{K}\right)\right)+{RH}_{OFFSET}, {T}_{H}\right)\end{matrix}$ mit:
Td2 := zweite Taupunkt-Temperatur
RH_{H}' := berechnete Feuchte bei der Abkühltemperatur T_{K}
RH_{OFFSET} := Feuchte-Offset, um systematische Messfehler zu korrigieren, z.B. bedingt durch Polymeralterung etc.
RH_{H} := gemessene Feuchte bei der Aufheiztemperatur zum Zeitpunkt t1
RH_{TK} := temperaturabhängige Korrekturgröße für die gemessene Feuchte RH_{H}, verursacht durch Temperaturquerempfindlichkeit des Polymers, berechnet gemäß
${RH}_{TK} : = TK_Polymer \cdot \left({T}_{H}-{T}_{K}\right)$ mit
TK_Polymer := Temperaturquerempfindlichkeit des Polymers
T_{H} := Aufheiztemperatur
T_{K} := Abkühltemperatur

Unter der Annahme, dass dem System während der Temperaturänderungen keine Wassermoleküle hinzugefügt oder entnommen werden, führt die Temperaturerhöhung zu keiner Änderung der Taupunkttemperatur Td2 gegenüber der Taupunkttemperatur Td1. Über das Gleichsetzen der Taupunkttemperaturen, d.h. Td1 = Td2, lässt sich somit der Feuchte-Offset RH_{OFFSET} des kapazitiven Feuchtesensors bestimmen, für den diese Gleichheit gilt.

Problematisch an diesem Vorgehen ist nunmehr, dass sich über die Lebensdauer des kapazitiven Feuchtesensors die Temperaturquerempfindlichkeit TK_Polymer des zur Feuchtemessung genutzten Polymers ändern kann. Aufgrund einer derartigen Änderung ist dann nicht mehr zu unterscheiden, ob eine gemessene Kapazitätsänderung im Polymer auf eine geänderte Feuchte und damit durch eine geänderte Taupunkttemperatur oder aber durch eventuelle Strukturänderungen des Polymers verursacht wird. Die genaue Kenntnis der jeweiligen Temperaturquerempfindlichkeit TK_Polymer des zur Feuchtemessung genutzten Polymers ist somit grundsätzlich wichtig für die Genauigkeit eines kapazitiven Feuchtesensors über dessen Lebensdauer.

Zu beachten ist in diesem Zusammenhang weiter die Abhängigkeit der Temperaturquerempfindlichkeit TK_Polymer von der jeweiligen Taupunkttemperatur. Zur Veranschaulichung dieser Problematik sei auf die Darstellung in Figur 2a verwiesen, die den temperaturabhängigen Verlauf bestimmter Größen bei einer Taupunkttemperatur Td = -40°C im Temperaturintervall zwischen 20°C und 120°C zeigt.

Im Einzelnen dargestellt ist dabei jeweils der temperaturabhängige Verlauf des von einem kapazitiven Feuchtesensor gemessenen Feuchte-Messwerts RH_{MESS}, der Verlauf des tatsächlichen Feuchte-Messwerts RH_{REAL} sowie der Verlauf der Korrekturgröße RH_{TK}. Wie aus der Figur ersichtlich, wird die Korrekturgröße RH_{TK}, die sich gemäß obiger Gl. 1.3 als ${RH}_{TK} = TK_Polymer \cdot \left({T}_{H}-{T}_{K}\right)$ ergibt, mit steigender Temperatur immer größer. Das Verhältnis aus dem gemessenen Nutzsignal RH_{HUB} = RH_{H} - RH_{M}, also der temperaturbedingten Feuchteänderung, und der Korrekturgröße RH_{TK} wird daher mit steigender Temperatur immer kleiner, der entsprechende temperaturabhängige Verlauf dieses Verhältnisses ist ebenfalls in Figur 2a veranschaulicht. Wie aus der Figur ersichtlich, liegt das Verhältnis RH_{HUB}/RH_{TK} bei einer Temperatur von 60°C etwa bei 86%, bei einer Temperatur von 120°C nur noch bei knapp 40%.

Dieser Effekt verstärkt sich massiv bei noch kleineren Taupunkttemperaturen Td. Hierzu sei auf die analoge Darstellung der verschiedenen Größen in Figur 2b verwiesen, die die Verhältnisse bei einem Taupunkt Td = -80°C veranschaulicht. So beträgt hier das Verhältnis RH_{HUB}/RH_{TK} bei einer Temperatur von 60°C etwa 0,54%, bei einer Temperatur von 120°C nur noch 0,24%.

Die Bestimmung der Temperaturquerempfindlichkeit TK_Polymer wird somit bei niedrigeren Taupunkttemperaturen immer problematischer, da dabei die auf die Temperaturänderung zurückgehende Feuchteänderung ebenfalls immer kleiner wird, während gleichzeitig bei erhöhten Temperaturen die Korrekturgröße RH_{TK} immer größer wird. Dies bedeutet, dass sich das Verhältnis aus Nutzsignal zu Störsignal vergrößert. Verringert man die Temperatur, so entwickelt sich dieses Verhältnis zwar wieder günstiger, gleichzeitig steigen die Anforderungen an die Genauigkeit der Temperaturmessung bei der Bestimmung der Differenz aus den Temperaturen T_{H} und T_{K}. Insgesamt resultieren somit Schwierigkeiten, die Temperaturquerempfindlichkeit TK_Polymer über die Lebensdauer des kapazitiven Feuchtesensors zuverlässig zu bestimmen, was wiederum negative Auswirkungen auf die Genauigkeit der Feuchtemessung bzw. der Taupunktbestimmung hat.

Ein erstes Ausführungsbeispiel der erfindungsgemäßen Feuchtemessvorrichtung, das diese Problematik umgeht und demgegenüber eine zuverlässige Korrektur der Temperaturquerempfindlichkeit eines kapazitiven Feuchtesensors ermöglicht, sei im Folgenden anhand der Figuren 3 - 6c erläutert.

Figur 3 zeigt hierbei eine stark schematisierte Darstellung des ersten Ausführungsbeispiels der erfindungsgemäßen Feuchtemessvorrichtung, bei dem auf einem Trägerelement 10 ein Heizelement 11, ein Temperatursensor 12 sowie ein kapazitiver Feuchtesensor 13 angeordnet sind.

Das Heizelement 11, der Temperatursensor 12 und der Feuchtesensor 13 sind im vorliegenden Ausführungsbeispiel der erfindungsgemäßen Vorrichtung weiterhin vollständig von einer Schutzschicht 14 umgeben. Die Schutzschicht 14 ist dabei durchlässig für Wassermoleküle aus dem Messraum 20 ausgebildet, der die Feuchtemessvorrichtung umgibt. Abweichend hierzu wäre es auch möglich, dass lediglich der Feuchtesensor 13 von der Schutzschicht 14 umgeben ist.

Das Heizelement 11 sowie die beiden Sensoren 12, 13 sind weiterhin mit einer ebenfalls nur schematisch angedeuteten Steuereinheit 30 verbunden. Über die Steuereinheit 30 kann das Heizelement an- und abgeschaltet werden; die Sensoren 12, 13 übertragen die gewonnenen Messwerte bezüglich Temperatur und Feuchte zur Weiterverarbeitung an die Steuereinheit 30. Weitere Funktionen der Steuereinheit 30 werden im weiteren Verlauf der Beschreibung noch detailliert erläutert.

In einer möglichen Ausführungsform sind zumindest die Steuereinheit 30, der Temperatursensor 12, sowie das Heizelement 11 gemeinsam in einem integrierten Baustein angeordnet, der auf dem Trägerelement 10 platziert wird. Das Trägerelement 10 ist dabei vorzugsweise als dünne Leiterplatte bzw. Platine ausgebildet, auf die der integrierte Baustein aufgelötet wird.

Mit Hilfe des Heizelements 11 kann die Feuchtemessvorrichtung auf eine definierte Aufheiztemperatur T_{H} aufgeheizt werden, wozu das Heizelement 11 über die Steuereinheit 30 geeignet angesteuert wird. Als Heizelement kann dabei z.B. ein Feldeffekttransistor (FET) vorgesehen sein, der als Konstantstromquelle verwendet wird.

Im vorliegenden Ausführungsbeispiel ist eine passive Kühlung der Feuchtemessvorrichtung vorgesehen, um diese von der Aufheiztemperatur T_{H} auf eine definierte Abkühltemperatur T_{K} über natürliche Konvektion abzukühlen; die Abkühltemperatur T_{K} entspricht hier damit der Mediumstemperatur T_{M}.

Als geeignetes Kühlelement kann in diesem Beispiel eine metallische Kühlfläche im Trägerelement 10 dienen, etwa eine Kupfer-Platinenebene in der Leiterplatte, an die der integrierte Baustein thermisch angekoppelt ist. Hierzu kann vorgesehen sein, ein Thermal-Pad des integrierten Bausteins über eine Durchkontaktierung mit der Kupfer-Platinenebene auf der gegenüberliegenden Seite der Leiterplatte zu verbinden. Die Kupfer-Platinenebene fungiert hier demnach als Kühlfläche respektive Kühlelement, über das eine passive Konvektionskühlung der Feuchtemessvorrichtung resultiert. Weiterhin ist für eine gute und schnelle Kühlwirkung in diesem Beispiel vorgesehen, die Leiterplatte möglichst dünn und klein auszubilden und lediglich schmale Leiterbahnen vorzusehen; möglich wäre z.B. die Nutzung einer sogenannten Flex-Platine. Generell erweist sich für die Kühlwirkung als vorteilhaft, wenn sämtliche Komponenten der Feuchtemessvorrichtung eine möglichst geringe Masse aufweisen.

Alternativ zur Nutzung einer Kühlfläche kann auch vorgesehen sein, das Kühlelement als Kühlkörper auszubilden, der eine möglichst geringe Masse sowie eine möglichst große Oberfläche besitzt, um Wärme von der Feuchtemessvorrichtung an die Umgebung abzuführen. Geeignet hierzu wäre beispielsweise ein sogenannter Pin-Fin-Kühlkörper, der über eine Lötverbindung auf dem Trägerelement in Form einer dünnen Platine angeordnet wird und thermisch an das Thermal-Pad des integrierten Bausteins angekoppelt ist.

Der ebenfalls nur schematisch in Figur 3 angedeutete Temperatursensor 12 dient zur Bestimmung der Temperatur des Feuchtesensors 13 und des umgebenden Mediums im Messraum 20. Als Temperatursensor 12 kommt z.B. ein PTAT CMOS-Temperatursensor in Betracht.

Mit Hilfe des Feuchtesensors 13 erfolgt die Bestimmung des Feuchtegehalts im umgebenden Medium im Messraum 20. Werden das Heizelement 11, der Temperatursensor 12 sowie die Steuereinheit 30 wie oben bereits erwähnt, in einem integrierten Baustein angeordnet, so kann auch der Feuchtesensor 13 darin angeordnet werden. Dies kann z.B. im oberen Bereich des integrierten Bausteins erfolgen, wobei der Feuchtesensor 13 dann nach außen bzw. zum Messraum 20 durch die Schutzschicht 14 abgedeckt ist.

Der in Figur 3 nicht im Detail dargestellte Feuchtesensor 13 ist als kapazitiver Feuchtesensor ausgebildet und besteht vorzugsweise aus einem Plattenkondensator mit einem zwischen den plattenförmigen Elektroden angeordneten Polymer, dessen feuchteabhängige Kapazitätsänderung in ein elektrisches Signal umsetzbar ist und als Messgröße für die zu bestimmende Feuchtigkeit genutzt wird. Grundsätzlich möglich wäre an dieser Stelle auch die Verwendung eines kapazitiven Feuchtesensors in Interdigital-Bauweise.

Maßgeblich für die erfindungsgemäße Feuchtemessvorrichtung ist die spezielle Ausbildung der Schutzschicht 14, über die der Feuchtesensor 13 vom umgebenden Medium getrennt ist. Die Schutzschicht 14 muss von der zu messenden Feuchte bzw. den entsprechenden Wassermolekülen aus dem Messraum 20 durchdrungen werden, damit über den kapazitiven Feuchtesensor 13 eine Feuchtemessung respektive eine Erzeugung feuchteabhängiger elektrischer Signale möglich ist. Während der Zeitdauer, in der die Wassermoleküle die Schutzschicht 14 durchdringen, resultiert seitens des Feuchtesensors 13 keine Signaländerung, d.h. es wird in dieser Zeit keine Feuchte gemessen. Erst sobald die Wassermoleküle die plattenförmigen Elektroden des Feuchtesensors 13 erreichen, wird ein feuchteabhängiges Signal erzeugt. Die Schutzschicht 14 ist demzufolge verantwortlich für eine bestimmte Totzeit t_{TOT}, innerhalb der keine Wassermoleküle durch die Schutzschicht 14 gelangen und während der keine Signaländerung des Feuchtesensors 13 resultiert. Verantwortlich für die Totzeit t_{TOT} ist ein Diffusionsprozess, der stark von der jeweiligen Temperatur abhängt; je höher die Temperatur, umso schneller verläuft der entsprechende Diffusionsprozess bzw., desto kürzer ist die jeweilige Totzeit t_{TOT}. Bezüglich dieses Zusammenhangs sei auf die Figur 4 verwiesen. Gezeigt ist darin zum einen über einen Temperaturbereich [-40°C; +130°C] die durch eine Schutzschicht 14 verursachte Totzeit t_{TOT} eines kapazitiven Feuchtesensors 13 mit Schutzschicht 14. Zum anderen ist die deutlich kleinere temperaturabhängige Ansprechzeit einer kapazitiven Feuchtemessvorrichtung ohne Schutzschicht dargestellt. Hervorgehoben ist im Diagramm der Figur 4 ein Temperaturbereich zwischen einer Abkühltemperatur T_{K} = 20°C, die hier der Mediumstemperatur T_{M} entspricht, und einer Aufheiztemperatur T_{H} = 60°C. Wie ersichtlich, variiert in diesem Bereich die Totzeit t_{TOT} der Schutzschicht zwischen knapp 100sec bei der Abkühltemperatur T_{K} = 20°C und etwa 1sec bei der Aufheiztemperatur T_{H} = 60°C und umgekehrt, wenn die Feuchtemessvorrichtung in diesem Temperaturbereich aufgeheizt und/oder abgekühlt wird. Deutlich geringer sind in diesem Temperaturbereich wie ebenfalls ersichtlich die Ansprechzeiten der Feuchtemessvorrichtung ohne Schutzschicht.

Die geeignete Auslegung bzw. Ausbildung der Schutzschicht 14 in der erfindungsgemäßen Feuchtemessvorrichtung erfolgt über die Auswahl der Materialien und/oder die Einstellung der Dicke der Schutzschicht 14. Die Schutzschicht ist hierbei derart ausgebildet, dass die Abkühl-Zeitdauer T_{COOL} der Schutzschicht 14 zwischen einer Aufheiztemperatur T_{H} und einer Abkühltemperatur T_{K} kürzer ist als die Totzeit t_{TOT}, während der nach dem Abkühlen keine Wassermoleküle durch die Schutzschicht 14 zum Feuchtesensor 13 gelangen und während der keine Signaländerung des Feuchtesensors 13 resultiert. Neben der Schutzschicht 14 kühlt im Übrigen auch das feuchteempfindliche Polymer des Feuchtesensors innerhalb der Totzeit t_{TOT} auf die Abkühltemperatur T_{K} ab.

Weiterhin ist bei der Materialauswahl zu beachten, dass ein Material für die Schutzschicht 14 gewählt wird, das Feuchtigkeit bzw. Wassermoleküle möglichst nicht speichert, sondern einen guten Weitertransport der Feuchtigkeit sicherstellt.

Als Schutzschicht 14 kommen organische Schutzschichten in Betracht, über die die erwähnten Eigenschaften einstellbar sind. Geeignete Materialien sind z.B. Polyurethane, Acryle, Silikone, Epoxide, Polyimide, Polybenzoxazole, Polycarbonate, Polysulfone, Polybenzimidazole oder Polyamide. Geeignete Schutzschicht-Dicken für derartige Materialien liegen im Bereich 0,1µm - 100µm.

Alternativ wäre auch der Einsatz anorganischer Materialien für die Schutzschicht 14 möglich, die eine geeignete Feuchtedurchlässigkeit aufweisen. In diesem Fall kann die Dicke der Schutzschicht 14 noch etwas geringer gewählt werden und liegt im Bereich 0,02µm - 10µm.

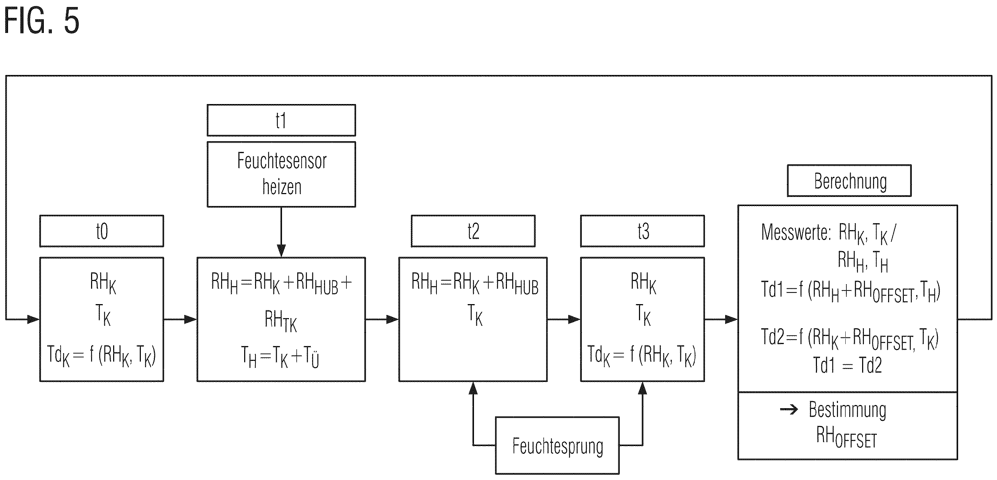

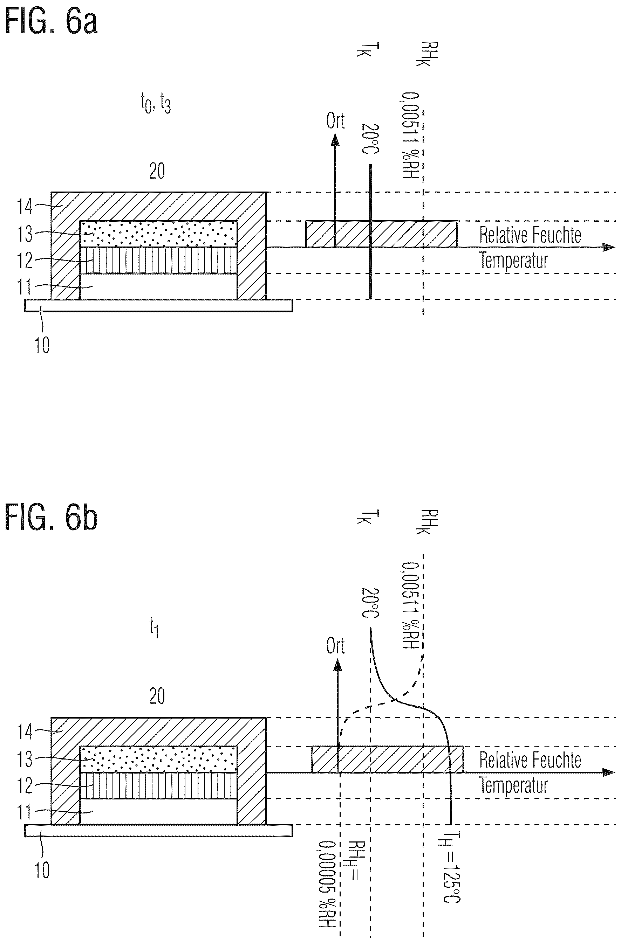

Im Folgenden wird nunmehr anhand der Figuren 5 sowie 6a - 6c ein Vorgehen erläutert, über das mit Hilfe der Feuchtemessvorrichtung aus Figur 3 die darüber gewonnenen Feuchte-Messwerte in Bezug auf Einflüsse korrigierbar sind, die nicht auf die Änderung des Feuchtegehalts im umgebenden Medium zurückzuführen sind. Figur 5 zeigt dabei ein Ablaufdiagramm inclusive der zu bestimmten Zeitpunkten t0 - t3 erfolgenden Messungen und Berechnungen. In den Figuren 6a - 6c ist jeweils ein Teil der Feuchtemessvorrichtung aus Figur 3 sowie der ortsabhängige Temperatur- und Feuchte-Verlauf zu den Zeitpunkten t0, t1 und t2 dargestellt. Der schraffierte Bereich im rechten Teil der Figuren 6a - 6c soll jeweils die im Bereich des Feuchtesensors herrschenden Temperatur- und Feuchte-Bedingungen veranschaulichen, die vom Feuchtesensor aktuell gemessen und in elektrische Signale umgesetzt werden.

Zum Zeitpunkt t0 liegt ein stabiler ausgeglichener Zustand in Bezug auf die Temperatur T_{K}, die Feuchte RH_{K} und den Taupunkt Td_{K} vor. Der Taupunkt Td_{K} resultiert wie oben erläutert aus den Sonntag-Formeln als Funktion der Feuchte RH_{K} und der Temperatur T_{K} zum Zeitpunkt t0, d.h. Td_{K} = f(RH_{K}, T_{K}). Beispielsweise kann zum Zeitpunkt t0 für diese Parameter gelten:
Td_{K} = -80°C
T_{K} = 20°C
RH_{K} = 0,00511%

Die entsprechenden Temperatur- und Feuchteverhältnisse zum Zeitpunkt t0 in der Feuchtemessvorrichtung sind ortsabhängig in Figur 6a veranschaulicht. Wie daraus ersichtlich, liegen entlang einer vertikalen Schnittline durch Feuchtemessvorrichtung jeweils identische Bedingungen in Bezug auf konstante Werte von Temperatur T_{K} und Feuchte RH_{K} vor.

Anschließend wird über die Steuereinheit 30 mit Hilfe des Heizelements 11 ein Aufheizvorgang gestartet, bei dem die Vorrichtung mit dem Temperatursensor 12, dem Feuchtesensor 13 und der Schutzschicht 14 auf die Aufheiztemperatur T_{H} aufgeheizt wird, die zum Zeitpunkt t1 erreicht ist. Die Feuchtemessvorrichtung wird dabei mindestens über eine Zeitdauer bei der Aufheiztemperatur T_{H} betrieben, bis ein Feuchteausgleich zwischen dem umgebenden Medium und dem Feuchtesensor 13 vorliegt. Die Aufheiztemperatur T_{H} beträgt im dargestellten Beispiel T_{H} = 125°C, wobei sich die Aufheiztemperatur gemäß ${T}_{H} = {T}_{K} + {T}_{Ü}$ ergibt, und die Größe T_{Ü} die Übertemperatur bzw. die Differenz zwischen der Temperatur T_{K} zum Zeitpunkt t0 und der Aufheiztemperatur T_{H} zum Zeitpunkt t1 darstellt.

Durch das Aufheizen sinkt die über den Feuchtesensor 13 gemessene Feuchte RH_{H} so weit ab, dass am Feuchtesensor 13 sowie im Messraum 20 die identische Taupunkt-Temperatur Td_{H} vorliegt. Für den Fall, dass während der Temperaturänderungen keine Wassermoleküle dem System entnommen oder hinzugefügt werden, gilt weiterhin Td_{K} = Td_{H} = -80°C. Die Feuchtemessung liefert im vorliegenden Beispiel zum Zeitpunkt t1 die Feuchte RH_{H} = 0,00005%, also eine Feuchte, die sich nur unwesentlich von einer Feuchte RH ≈ 0% unterscheidet. Das Verhältnis der gemessenen Feuchten RH_{K} und RH_{H} zu den Zeitpunkten t0 und t1 liegt damit bei der Taupunkt-Temperatur Td = -80°C annähernd bei 1:100.

Die zum Zeitpunkt t1 über den Feuchtesensor 13 gemessene Feuchte RH_{H} bei der Aufheiztemperatur T_{H} geht wie bereits oben erläutert zurück auf den durch die Temperaturänderung verursachten Anteil RH_{HUB} sowie auf einen Anteil RH_{TK}, der durch die Temperaturquerempfindlichkeit des verwendeten Polymers verursacht wird, d.h. ${RH}_{H} = {RH}_{K} + {RH}_{HUB} + {RH}_{TK}$

Aufgrund der hohen Aufheiztemperatur T_{H} ist die in der Schutzschicht 14 resultierende Totzeit t_{TOT} und damit auch die Ansprechzeit des Feuchtesensors 13 relativ kurz. Die verschiedenen Ausgleichsprozesse in der Feuchtemessvorrichtung laufen daher sehr schnell ab und können von der Ansprechzeit des Temperatursensors 12 nicht gut unterschieden werden.

Der ortsabhängige Verlauf der Temperatur sowie der Feuchte in der Feuchtemessvorrichtung während des Aufheizvorgangs zum Zeitpunkt t1 ist wiederum in Figur 6b veranschaulicht.

Nach Beendigung der Ausgleichsprozesse und dem Erreichen konstanter Feuchte- und Temperaturmesswerte RH_{H}, T_{H} wird der Aufheizvorgang beendet und das Heizelement 11 über die Steuereinheit 30 abgeschaltet. Daraufhin sinkt die Temperatur des Feuchtesensors 13, des Temperatursensors 12 und der Schutzschicht 14 rasch ab. Aufgrund der oben erwähnten Temperaturabhängigkeit der Totzeit t_{TOT} der Schutzschicht 14 steigt die Totzeit t_{TOT} mit sinkender Temperatur deutlich an, womit der Ausgleich der Feuchte zwischen dem Feuchtesensor 13 und dem umgebenden Medium so lange verzögert wird, bis die Temperatur zum Zeitpunkt t2 wieder auf die Temperatur T_{K} abgesunken ist.

Maßgeblich für das erfindungsgemäße Vorgehen ist demnach, dass aufgrund der resultierenden Totzeit t_{TOT}, bedingt durch die Schutzschicht 14, die gemessene Feuchte RH_{H} zum Zeitpunkt t2 nahezu 0% beträgt, obwohl die Temperatur des Feuchtesensors bereits wieder auf die Temperatur T_{K} des Mediums im Messraum 20 abgesunken ist, wobei in diesem Beispiel wie oben erwähnt T_{K} = T_{M} gilt.

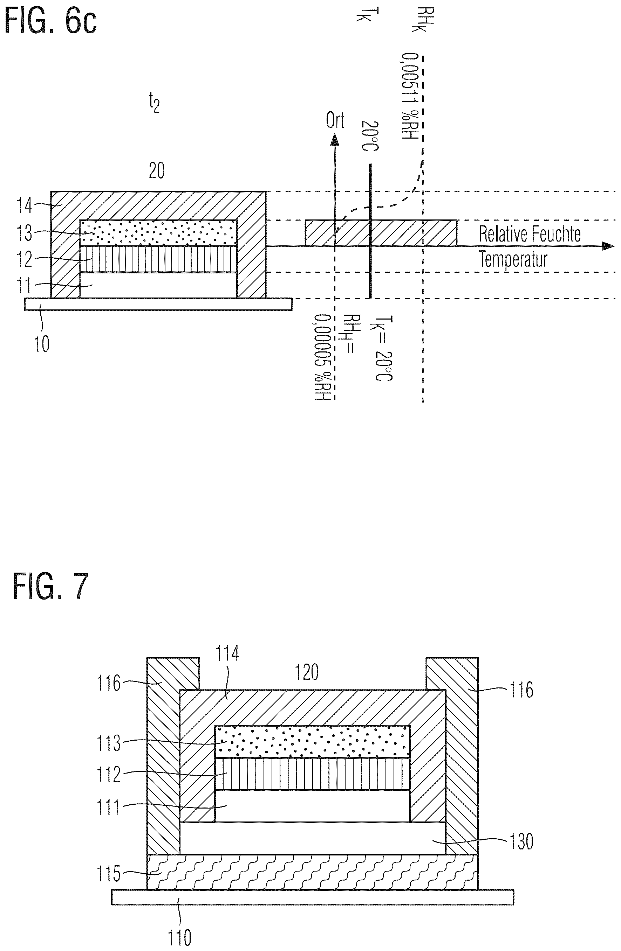

Figur 6c zeigt den ortsabhängigen Verlauf der Temperatur sowie der Feuchte in der Feuchtemessvorrichtung nach dem Abschalten des Heizelements und während der Totzeit t_{TOT} zum Zeitpunkt t2.

Bleibt die Temperatur T_{K} sowie die Feuchte RH_{K} im umgebenden Medium unverändert, so steigt im weiteren Verlauf nach einer bestimmten Zeit dann die gemessene Feuchte vom Wert RH_{H} zu einem Zeitpunkt t3 wieder auf den Wert RH_{K}. Die Feuchtemessvorrichtung wird hierbei mindestens über eine Zeitdauer bei der Abkühltemperatur T_{K} betrieben, bis ein Feuchteausgleich zwischen dem umgebenden Medium und dem Feuchtesensor 13 vorliegt. Über das erläuterte Vorgehen wird mit Hilfe der erfindungsgemäßen Vorrichtung im Zeitraum zwischen den Zeitpunkten t2 und t3 demnach ein Feuchtesprung von einem Feuchtewert RH_{H} auf den Feuchtewert RH_{K} bei der Temperatur T_{K} erzeugt, der ohne Quereinflüsse messbar ist, wie z.B. die Temperaturquerempfindlichkeit des verwendeten Polymers im kapazitiven Feuchtesensor 13. Dieser Feuchtesprung entspricht der oben erwähnten Größe RH_{HUB}, also der durch die Temperaturänderung bedingten Feuchteänderung.

Im Gefolge kann dann aus den gewonnenen Messwerten T_{H} zum Zeitpunkt t1, RH_{H} zum Zeitpunkt t2 bzw. den Messwerten RH_{K}, T_{K} zum Zeitpunkt t3 der Feuchte-Offset RH_{OFFSET} durch die Steuereinheit 130 berechnet werden. Dabei wird wiederum davon ausgegangen, dass die Taupunkte Td1 und Td2 zu den Zeitpunkten t1, t2, t3 identisch sind, wenn dem System während der Temperaturänderungen keine Wassermoleküle entnommen oder hinzugefügt werden. Das entsprechende Vorgehen mit Aufheizen, Abkühlen und Ermittlung des Feuchte-Offsets RH_{OFFSET} wird im Gefolge dann zyklisch wiederholt, beispielsweise im Abstand von 45 Minuten oder wenn sich die Umgebungsbedingungen des zu messenden Mediums schnell ändern.

Ein zweites Ausführungsbeispiel der erfindungsgemäßen Feuchtemessvorrichtung, das eine zuverlässige Korrektur der Temperaturquerempfindlichkeit eines kapazitiven Feuchtesensors ermöglicht, wird nachfolgend anhand der Figuren 7, 8, 9 sowie 10a - 10c erläutert. Hierbei wird im Wesentlichen auf die Unterschiede und Besonderheiten gegenüber dem ersten Ausführungsbeispiel eingegangen.

Figur 7 zeigt analog zum ersten Ausführungsbeispiel eine stark schematisierte Darstellung des zweiten Ausführungsbeispiels der erfindungsgemäßen Feuchtemessvorrichtung, bei der maßgebliche Komponenten nunmehr in einem integrierten Baustein angeordnet sind.

Auf einem Trägerelement 110 ist hier ein Kühlelement 115 angeordnet, das in diesem Beispiel als aktives Kühlelement in Form eines Peltierelements ausgebildet ist. Mit Hilfe des aktiven Kühlelements 115 ist es möglich, die Feuchtemessvorrichtung auf eine Abkühltemperatur T_{K} abzukühlen, die auch deutlich unterhalb der Mediumstemperatur T_{M} des Mediums im umgebenden Messraum 120 sein kann, d.h. hier liegt dann in der Regel der Fall T_{K} ≠ T_{M} vor. Über das Trägerelement 110 kann zudem Energie, die für den Betrieb des Kühlelements 115 erforderlich ist, abgeleitet werden, so dass die Kühlwirkung auf die restlichen Komponenten der Feuchtemessvorrichtung nicht beeinträchtigt wird. Die verschiedenen Vorteile im Zusammenhang mit der Verwendung eines aktiven Kühlelements 115 in der erfindungsgemäßen Feuchtemessvorrichtung werden im Verlauf der weiteren Beschreibung noch erläutert.

Auf bzw. oberhalb des Kühlelements 115 ist im vorliegenden Ausführungsbeispiel ein integrierter Baustein angeordnet, der eine Steuereinheit 130, ein Heizelement 111, einen Temperatursensor 112 sowie einen Feuchtesensor 113 mit darüber angeordneter Schutzschicht 114 umfasst. Der integrierte Baustein ist dabei innerhalb eines ebenfalls nur stark schematisch angedeuteten Gehäuses 116 über dem Kühlelement 115 angeordnet. Das Gehäuse 116 besitzt lediglich oberhalb der Schutzschicht 114 eine Zugangsöffnung, durch die Wassermoleküle aus dem Messraum 120 durch die Schutzschicht 114 zum Feuchtesensor 113 gelangen können. Die Steuereinheit 130 ist über nicht in der Figur dargestellte elektrische Verbindungen mit dem Kühlelement 115, dem Heizelement 111, dem Temperatursensor 112 sowie dem Feuchtesensor 113 verbunden. Über diese Verbindungen kann das das Heiz- bzw. Kühlelement 111, 115 geeignet angesteuert werden; weiterhin werden darüber die Messwerte von Temperatur- und Feuchtesensor 112, 113 zur Steuereinheit 130 übertragen. Grundsätzlich ist es dabei nicht zwingend, dass das Heizelement 111 und das Kühlelement 115 über die Steuereinheit 130 angesteuert werden; dies kann alternativ auch über eine - nicht dargestellte - externe Elektronik erfolgen.

Die in Figur 7 dargestellte Variante der erfindungsgemäßen Feuchtemessvorrichtung mit aktivem Kühlelement 115 könnte im Übrigen auch vorteilhaft in einer Taupunkttemperatur-Messvorrichtung eingesetzt werden, wie sie aus der EP 4650765 A1 bekannt ist. So wäre es z.B. möglich, die dort vorgesehenen beiden Feuchtesensoreinheiten entsprechend zu dem in Figur 7 gezeigten Aufbau der vorliegenden Erfindung auszubilden; ein separates Kühlelement wäre damit für die zweite Feuchtesensoreinheit nicht mehr erforderlich.

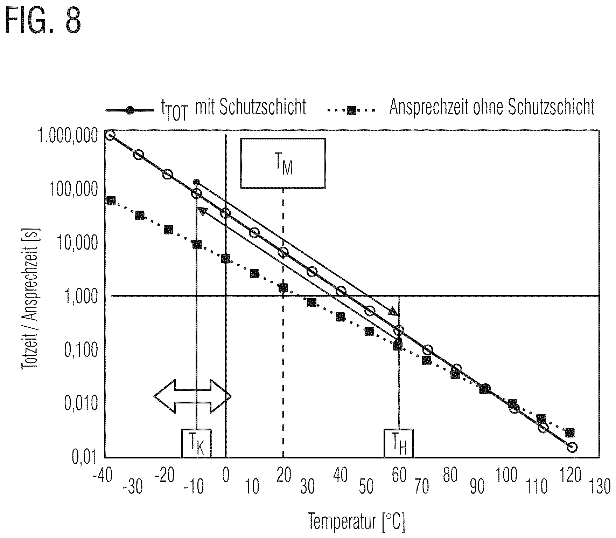

In Figur 8 ist analog zu Figur 4 wiederum der Zusammenhang zwischen der Schutzschicht-Totzeit t_{TOT} bzw. Ansprechzeit der Feuchtemessvorrichtung und der Temperatur für den Fall mit und ohne Schutzschicht dargestellt.

Über das aktive Kühlelement 115 kann in diesem Ausführungsbeispiel nunmehr auch die Abkühltemperatur T_{K} unabhängig von der Mediumstemperatur T_{M} eingestellt werden, d.h. T_{K} ≠ T_{M}. Damit lässt sich der gesamte Temperaturbereich zwischen Aufheiz- und Abkühltemperatur T_{H}, T_{K} besonders vorteilhaft bzw. bedarfsgerecht wählen, insbesondere unabhängig von der aktuellen Mediumstemperatur T_{M}. Anstelle des passiven Abkühlvorgangs nach dem Abschalten des Heizelements gemäß dem ersten Ausführungsbeispiel erfolgt hier eine Regelung mit Hilfe des aktiven Kühlelements 115 auf die gewünschte Abkühltemperatur T_{K}, die eine bestimmte Totzeit t_{TOT} besitzt. Über eine derartige Regelung auf die gewünschte Abkühltemperatur T_{K} kann auch die Abkühlgeschwindigkeit erhöht werden, was dann wiederum die Totzeit t_{TOT} der Schutzschicht 114 verkürzt. Wie aus Figur 8 hervorgeht, resultiert etwa bei einem raschen Abkühlen auf T_{K} = 20°C eine Totzeit von t_{TOT} = 8sec, wogegen bei einem deutlich langsameren Abkühlen ohne aktives Kühlelement 115 auf die gleiche Temperatur T_{K} = 20°C eine Totzeit t_{TOT} = 40sec vorliegt. Über das aktive Abkühlen auf eine gewünschte Abkühltemperatur T_{K} mit Hilfe des Kühlelements 115 ist somit eine deutlich schnellere Einstellung des Systems möglich.

Unter Verwendung eines aktiven Kühlelements 115 kann nunmehr auch der Vorteil der sogenannten Feuchtetransformation genutzt werden. Dies bedeutet, dass eine höhere relative Feuchte bei sehr niedrigen Taupunkttemperaturen resultiert, was deutlich genauere Messungen ermöglicht. Dies wird im Folgenden anhand eines konkreten Beispiels erläutert.

So ergibt sich bei ausgeschaltetem Heizelement 111 und ausgeschaltetem Kühlelement 115 zu einem Zeitpunkt t0 bei einer Taupunkttemperatur Td = - 80°C und einer Mediumstemperatur T_{M} = 20°C eine gemessene Feuchte RH_{M} = 0,00511%.

Nach Einschalten des Heizelements 111 resultiert zu einem Zeitpunkt t1 bei gleicher Taupunkttemperatur Td = -80°C nach einer bestimmten Zeit eine gemessene Aufheiztemperatur T_{H} = 125°C und eine gemessene Feuchte RH_{H} = 0,00005%, also ein Feuchte-Messwert nahe 0%. Je niedriger dabei die Taupunkttemperatur ist, desto niedriger ist auch der entsprechende Feuchte-Messwert RH_{H}.

Kühlt man die Vorrichtung über ein aktives Kühlelement 115 auf eine Abkühltemperatur TK = -40°C, so misst man zu einem Zeitpunkt t0 bzw. t3 in einem ausgeglichenen Zustand eine Feuchte RH_{K} = 0,62694%. Der Feuchte-Messwert RH_{K} ist demzufolge um mehr als einen Faktor 100 größer als der gemessene Feuchte-Messwert ohne aktive Kühlung. Dieser Effekt entspricht der oben erwähnten Feuchtetransformation und bietet erhebliche Vorteile in Bezug auf die Genauigkeit der Messung. So beträgt das Verhältnis der gemessenen Feuchten zu den Zeitpunkten t1 (RH_{H} = 0,00005%) und t3 (RH_{H} = 0,62694%) bei einer Taupunkttemperatur Td = -80°C etwa 1: 12.539; über das aktive Kühlen resultiert somit ein um mehr als den Faktor 100 höherer Feuchtehub und damit auch eine verbesserte Auflösung bei der Taupunktmessung.

Aufgrund der aktiven Kühlung muss die Abkühltemperatur T_{K} damit nicht mehr der Mediumstemperatur T_{M} entsprechen, sondern kann mit Hilfe des Kühlelements 115 geeignet gewählt werden. Über das Kühlen der Luft in der Umgebung der Feuchtemessvorrichtung steigt dort die (relative) Feuchte in der Luft, wird durch die Schutzschicht 114 zum Feuchtesensor 113 weitertransportiert und kann auf diese Art und Weise messtechnisch bestimmt werden. Die zu erreichende Temperaturdifferenz zwischen Aufheiztemperatur T_{H} und Abkühltemperatur T_{K} ist damit lediglich durch die Kühlleistung des Kühlelements 115 begrenzt.

Das erfindungsgemäße Vorgehen entspricht in Bezug auf dieses Ausführungsbeispiel grundsätzlich demjenigen, das für das erste Ausführungsbeispiel mit Hilfe von Figur 5 im Detail erläutert wurde. Der einzige Unterschied zum vorliegenden Beispiel besteht darin, dass nunmehr nach dem Aufheizen anstelle eines passiven Abkühlens auf die Mediumstemperatur T_{M} eine aktive Abkühlung auf die Abkühltemperatur T_{K} erfolgt. Die Abkühltemperatur T_{K} ist demzufolge vorliegend ungleich der Mediumstemperatur T_{M} und wird in der Regel kleiner als die Mediumstemperatur T_{M} gewählt werden.

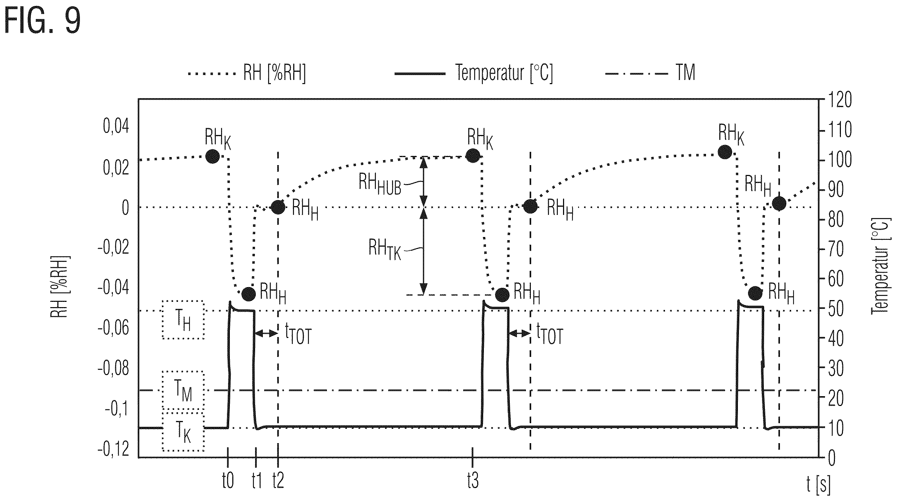

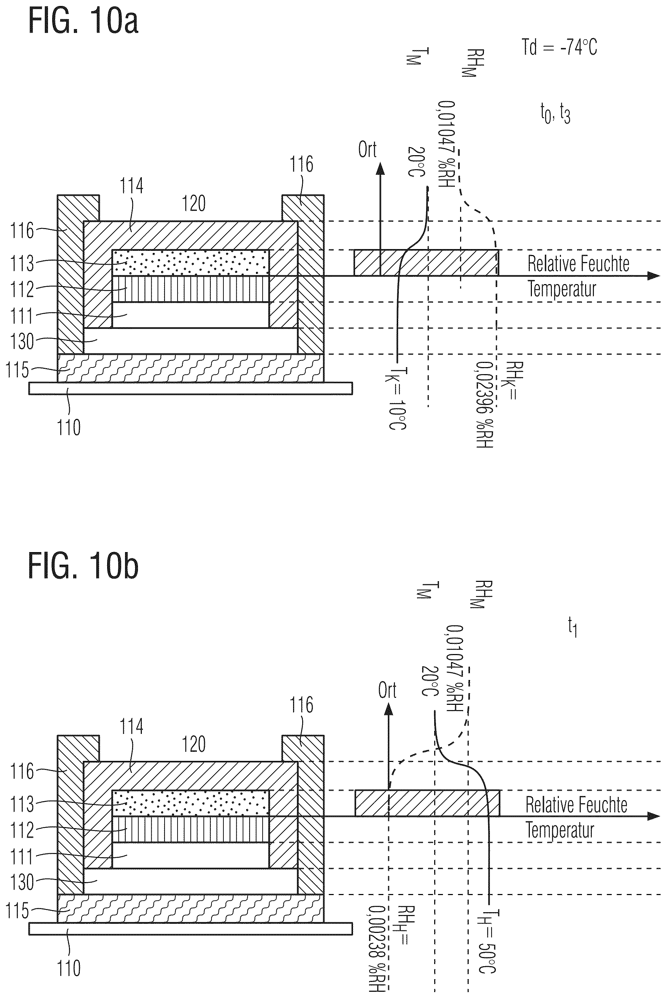

Im Gefolge seien anhand der Figuren 9 und 10a - 10c das Vorgehen erläutert, über das mit Hilfe der Feuchtemessvorrichtung aus Figur 7 die darüber gewonnenen Feuchte-Messwerte in Bezug auf Einflüsse korrigierbar sind, die nicht auf die Änderung des Feuchtegehalts im umgebenden Medium zurückzuführen sind. In Figur 9 ist dabei im oberen Teil der zeitliche Verlauf der Feuchte-Messwerte während des erfindungsgemäßen Vorgehens beim zweiten Ausführungsbeispiel gezeigt, die linke y-Achse gibt die entsprechenden Feuchte-Messwerte RH an. Im unteren Teil der Figur ist der zeitliche Temperatur-Verlauf veranschaulicht, die rechte y-Achse gibt die jeweiligen Temperatur-Messwerte T an. Dargestellt wird hier ein Vorgehen bei einer Taupunkttemperatur Td = -74°C und einem aktiven Herabkühlen von einer Aufheiztemperatur T_{H} = 50°C auf eine Abkühltemperatur T_{K} = 10°C bei einer Mediumstemperatur T_{M} = 23°C, also T_{K} ≠ T_{M}. In den Figuren 10a - 10c ist jeweils ein Teil der Feuchtemessvorrichtung aus Figur 7 sowie der ortsabhängige Temperatur- und Feuchte-Verlauf zu den Zeitpunkten t0, t1 und t2 dargestellt. Der schraffierte Bereich im rechten Teil der Figuren 10a - 10c soll jeweils die Umweltbedingungen veranschaulichen, die vom Feuchtesensor 113 aktuell gemessen und in elektrische Signale umgesetzt werden.

Im dargestellten Beispiel für eine Taupunkttemperatur Td = -74°C ist bei einer Mediumstemperatur T_{M} = 23°C eine Aufheiztemperatur T_{H} = 50°C sowie eine Abkühltemperatur T_{K} = 10°C vorgesehen.

Figur 10a zeigt die Verhältnisse in einem ausgeglichenen Zustand zum Zeitpunkt t0 bzw. t3. Das Heizelement 111 ist zu diesem Zeitpunkt abgeschaltet, das Kühlelement 115 ist angeschaltet, sodass im Messraum 120 eine Mediumstemperatur T_{M} = 23°C und in der erfindungsgemäßen Feuchtemessvorrichtung eine Abkühltemperatur T_{K} = 10°C vorliegt. Im Messraum liegt weiterhin eine Feuchte RH_{M} = 0,01047% vor, vom Feuchtesensor 113 wird in der erfindungsgemäßen Vorrichtung eine Feuchte RH_{K} = 0,02396% gemessen.

Anschließend wird das Heizelement 111 eingeschaltet und das Kühlelement 115 abgeschaltet. Die Verhältnisse zum Zeitpunkt t1 sind in Figur 10b dargestellt. In der Feuchtemessvorrichtung liegt eine Aufheiztemperatur T_{H} = 50°C sowie eine auf den Wert RH_{H} = 0,00238% gesunkene Feuchte vor. Eine Bestimmung der Feuchte über den Feuchtesensor 113 erfolgt zu diesem Zeitpunkt noch nicht, diese Phase dient vielmehr primär zur Einstellung der Feuchte RH_{H} am Feuchtesensor 113.

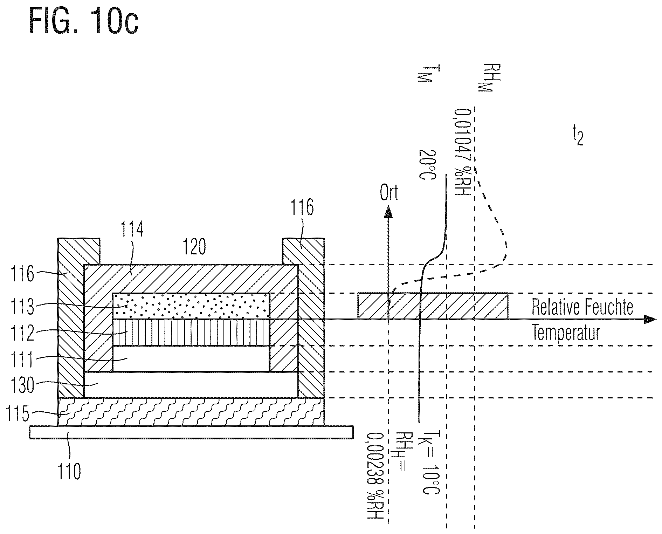

Daraufhin wird das Heizelement 111 abgeschaltet und das Kühlelement 115 angeschaltet. Nach dem Abkühlen des Feuchtesensors 113 und der Schutzschicht 114 wird kurz vor dem Verstreichen der Totzeit t_{TOT} dann zum Zeitpunkt t2 - veranschaulicht in Figur 10c - über den Feuchtesensor 113 die Feuchte RH_{H} = 0,00238% bei der Abkühltemperatur T_{K} = 10°C gemessen. Maßgeblich ist hierbei, dass aufgrund der noch nicht vollständig verstrichenen Totzeit t_{TOT} die gemessene Feuchte RH_{H} noch immer nahezu 0% beträgt, obwohl die gemessene Temperatur in der Feuchtmessvorrichtung bereits wieder auf die Abkühltemperatur T_{K} = 10°C abgesunken ist.

Im Gefolge durchdringt die Feuchtigkeit die Schutzschicht 114, so dass wie aus Figur 9 ersichtlich nach der Totzeit t_{TOT} die über den Feuchtesensor gemessene Feuchte anzusteigen beginnt, bis zum Zeitpunkt t3 wieder eine Feuchte RH_{K} = 0,02396% bei der Abkühltemperatur T_{K} = 10°C vorliegt, die über den Feuchtesensor 113 gemessen wird.

Durch die Verwendung eines Kühlelements 115 zur Kühlung des Feuchtesensors 113 und der Schutzschicht 114 kann im vorliegenden Ausführungsbeispiel die Abkühltemperatur T_{K} unabhängig von der Temperatur T_{M} des zu messenden Mediums eingestellt werden, sofern das Kühlelement 115 die hierzu benötigte Kühlleistung aufweist. Das Kühlelement 115 sowie die Schutzschicht 114 werden so ausgelegt, dass bei jeglicher Mediumstemperatur T_{M} die Totzeit T_{TOT} erkennbar ist und somit ein tatsächlicher Feuchtesprung bei der Temperatur T_{K} zu den Zeitpunkten t2 und t3 zwischen den Feuchten RH_{K} und RH_{H} messbar wird, der unabhängig von sonstigen Einflüssen ist wie z.B. der Temperaturquerempfindlichkeit des verwendeten Polymers im kapazitiven Feuchtesensor 113. Damit lässt sich mittels der oben angegebenen Gleichung 1.3 über die Messung der Temperaturen T_{K} und T_{H} zu den Zeitpunkten t2 und t3 bzw. der Feuchte RH_{H} zum Zeitpunkt t2 die Temperaturquerempfindlichkeit TK_Polymer gemäß TK_Polymer = RH_{TK} / (T_{H} - T_{K}) bestimmen; diesbezüglich sei zudem auf die Figur 9 verwiesen. Die derart bestimmte Größe entspricht dann einer durchschnittlichen Temperaturquerempfindlichkeit zwischen den Temperaturen T_{H} und T_{K}.

Über die aktive Kühlung resultiert in diesem Ausführungsbeispiel weiterhin eine Vervielfachung des Messignals für die relative Feuchte, was insbesondere eine deutlich erhöhte Auflösung bei der Bestimmung von sehr niedrigen Taupunkttemperaturen zur Folge hat. Damit ist entweder eine Messung von Taupunkttemperaturen bis zu Td = -125°C möglich oder aber eine deutlich erhöhte Genauigkeit bei der Messung nicht ganz so tiefer Taupunkttemperaturen, also etwa für Taupunkttemperaturen Td = -80°C.

Neben den konkret beschriebenen Ausführungsbeispielen und den bislang erläuterten Alternativen existieren im Rahmen der vorliegenden Erfindung selbstverständlich noch weitere Ausgestaltungsmöglichkeiten.

So gibt es wie bereits angedeutet im erläuterten ersten Ausführungsbeispiel mit passiver Kühlung weitere Möglichkeiten zur Ausbildung geeigneter Kühlelemente.

Des Weiteren wäre es grundsätzlich möglich, das zweite Ausführungsbeispiel dahingehend zu modifizieren, dass kein separates Heizelement darin vorgesehen wird, sondern das als Peltierelement ausgebildete Kühlelement auch als Heizelement genutzt wird, indem dessen Funktionalität über die Steuereinheit einstellbar ist. Beispielsweise könnte das Peltierelement durch ein Umpolen über die Steuereinheit zu den entsprechenden Zeitpunkten auch als Heizelement verwendet werden.

Ferner wäre im Fall, dass der Temperatursensor z.B. als temperaturabhängiger Widerstand ausgebildet ist, denkbar, dass der Temperatursensor gleichzeitig als Heizelement fungiert usw..

## Patentansprüche

1. Feuchtemessvorrichtung mit
- einem kapazitiven Feuchtesensor (13; 113) zur Bestimmung des Feuchtegehalts in einem umgebenden Medium,
- einer Schutzschicht (14; 114), die den Feuchtesensor (13; 113) umgibt und durchlässig für Wassermoleküle ist,
- einem Temperatursensor (12; 112) zur Bestimmung der Temperatur des Feuchtesensors (13; 113) und des umgebenden Mediums,
- einer Steuereinheit (30; 130), der die Ausgangssignale des Feuchtesensors (13; 113) und des Temperatursensors (12; 112) zuführbar sind,
- einem Heizelement (11; 111) zum Aufheizen der Feuchtemessvorrichtung auf eine definierte Aufheiztemperatur (T_{H}), und
- einem Kühlelement (115) zum Abkühlen der Feuchtemessvorrichtung auf eine definierte Abkühltemperatur (T_{K}), und
- wobei die Schutzschicht (14; 114)) derart ausgebildet ist, dass deren Abkühl-Zeitdauer (t_{COOL}) zwischen Aufheiztemperatur (T_{H}) und Abkühltemperatur (T_{K}) kürzer ist als eine Totzeit (t_{TOT}), während der nach dem Abkühlen keine Wassermoleküle durch die Schutzschicht (14; 114) zum Feuchtesensor (13; 113) gelangen und während der keine Signaländerung des Feuchtesensors (13; 113) resultiert.

2. Feuchtemessvorrichtung nach Anspruch 1, wobei die Schutzschicht (14; 114) als organische Schutzschicht ausgebildet ist und eine Dicke im Bereich 0,1µm - 100µm aufweist.

3. Feuchtemessvorrichtung nach Anspruch 1, wobei die die Schutzschicht (14; 114) als anorganische Schutzschicht ausgebildet ist und eine Dicke im Bereich 0,02µm - 10µm aufweist.

4. Feuchtemessvorrichtung nach mindestens einem der vorhergehenden Ansprüche, wobei mindestens die Steuereinheit (30; 130), der Temperatursensor (12; 112) und das Heizelement (11; 111) gemeinsam in einem integrierten Baustein angeordnet sind.

5. Feuchtemessvorrichtung nach Anspruch 4, wobei der Feuchtesensor (13; 113) als Plattenkondensator ausgebildet und ebenfalls im integrierten Baustein angeordnet ist und vom umgebenden Medium durch die über dem Plattenkondensator angeordnete Schutzschicht (14; 114) getrennt ist.

6. Feuchtemessvorrichtung nach mindestens einem der vorhergehenden Ansprüche, wobei das Kühlelement (115) als Peltierelement ausgebildet ist.

7. Feuchtemessvorrichtung nach Anspruch 6, wobei das Peltierelement auch als Heizelement fungiert und dessen jeweilige Funktionalität über die Steuereinheit (130) einstellbar ist.

8. Feuchtemessvorrichtung nach Anspruch 4, wobei das Kühlelement als metallische Kühlfläche in einem Trägerelement ausgebildet ist, auf dem der integrierte Baustein angeordnet ist, und über die Kühlfläche eine Konvektionskühlung der Feuchtemessvorrichtung resultiert.

9. Feuchtemessvorrichtung nach mindestens einem der vorhergehenden Ansprüche, wobei die Steuereinheit (30; 130) derart ausgebildet und eingerichtet ist, um
- die Feuchtemessvorrichtung auf die Aufheiztemperatur (T_{H}) aufzuheizen, und
- nach einer bestimmten Zeitdauer auf der Aufheiztemperatur (T_{H}) die Feuchtemessvorrichtung auf die Abkühltemperatur (T_{K}) abzukühlen, und
- dabei laufend über den Temperatursensor (12; 112) Temperatur-Messwerte und über den Feuchtesensor (13; 113) Feuchte-Messwerte bestimmt werden, bis nach dem Abkühlen und dem Verstreichen der Totzeit (t_{TOT}) nach einer bestimmten Zeitdauer bei der Abkühltemperatur (T_{K}) ein gleichbleibender Feuchte-Messwert erreicht ist, wodurch die Feuchte-Messwerte in Bezug auf Einflüsse korrigierbar sind, die nicht auf die Änderung des Feuchtegehalts im umgebenden Medium zurückgehen.

10. Feuchtemessvorrichtung nach Anspruch 9, wobei die Steuereinheit (30; 130) derart ausgebildet und eingerichtet ist, um das Aufheizen, das Abkühlen sowie die Korrektur der Feuchte-Messwerte zyklisch durchzuführen.

11. Verfahren zum Betrieb einer Feuchtemessvorrichtung, die einen kapazitiven Feuchtesensor (13; 113) zur Bestimmung des Feuchtegehalts in einem umgebenden Medium umfasst, der von einer für Wassermoleküle durchlässigen Schutzschicht (14; 114) umgeben ist, wobei
- die Feuchtemessvorrichtung auf eine Aufheiztemperatur (T_{H}) aufgeheizt wird, und
- nach einer bestimmten Zeitdauer auf der Aufheiztemperatur (T_{H}) die Feuchtemessvorrichtung auf eine Abkühltemperatur (T_{K}) abgekühlt wird, und
- nach dem Abkühlvorgang während einer Totzeit (t_{TOT}), in der keine Wassermoleküle durch die Schutzschicht (14; 114) zum Feuchtesensor (13; 113) gelangen, keine Signaländerung des Feuchtesensors (13; 113) resultiert, wobei
- laufend Temperatur-Messwerte und Feuchte-Messwerte bestimmt werden, bis nach dem Abkühlen und dem Verstreichen der Totzeit (t_{TOT}) nach einer bestimmten Zeitdauer bei der Abkühltemperatur (T_{K}) ein gleichbleibender Feuchte-Messwert erreicht ist, wodurch die Feuchte-Messwerte in Bezug auf Einflüsse korrigiert werden, die nicht auf die Änderung des Feuchtegehalts im umgebenden Medium zurückgehen.

12. Verfahren nach Anspruch 11, wobei
- die Feuchtemessvorrichtung mindestens über eine Zeitdauer bei der Aufheiztemperatur (T_{H}) betrieben wird, bis ein Feuchteausgleich zwischen dem umgebenden Medium und dem Feuchtesensor (13; 113) vorliegt, und/oder
- die Feuchtemessvorrichtung mindestens über eine Zeitdauer bei der Abkühltemperatur (T_{K}) betrieben wird, bis ein Feuchteausgleich zwischen dem umgebenden Medium und dem Feuchtesensor (13; 113) vorliegt.

13. Verfahren nach Anspruch 11, wobei die Abkühl-Zeitdauer (_{tCOOL}) der Schutzschicht (14; 114) zwischen Aufheiztemperatur (T_{H}) und Abkühltemperatur (T_{K}) kürzer ist als die Totzeit (t_{TOT}).

14. Verfahren nach Anspruch 11, wobei das Abkühlen aktiv oder durch Konvektionskühlung erfolgt.

15. Verfahren nach mindestens einem der Ansprüche 11 - 14, wobei das Aufheizen, das Abkühlen sowie die Korrektur der Feuchte-Messwerte zyklisch durchgeführt werden.
